# EUROPEAN PATENT APPLICATION

(11) **EP 4 852 507 A1**
(43) Date of publication of application: **09.12.2026**
(21) Application number: 24926687.5
(22) Date of filing: 02.09.2024
(51) Int. Cl.: H04W 24/10

(54) **MEASUREMENT REPORT PROCESSING METHOD, TERMINAL AND NETWORK ELEMENT**

(30) Priority: 27.02.2024 CN 202410216246
(71) Applicant: ZTE CORPORATION, Shenzhen, Guangdong 518057 (CN)
(72) Inventor: LIU, Zhuang, Shenzhen, Guangdong 518057 (CN); GAO, Yin, Shenzhen, Guangdong 518057 (CN); LI, Dapeng, Shenzhen, Guangdong 518057 (CN); CHEN, Jiajun, Shenzhen, Guangdong 518057 (CN); ZHANG, Man, Shenzhen, Guangdong 518057 (CN)
(74) Representative: Mozzi, Matteo
(86) International application number: PCT/CN2024/116367
(87) International publication number: WO 2025/179820

(57) **Abstract**

Provided are a method for processing measurement reports, a terminal, and a network element. The method includes: reporting, by a terminal, a measurement report to a target network element according to preconfigured target network element information; and acquiring, by another network element, the measurement report from the target network element.

## Description

### Cross-Reference to Related Application

The present disclosure is based on and claims the benefit of priority of Chinese Patent Application No. CN202410216246.6, filed on February 27, 2024 and entitled " Method for Processing Measurement Reports, Terminal and Network Element", the disclosure of which is incorporated herein by reference in its entirety.

### Technical Field

The present disclosure relates to the field of communications, and in particular to a method for processing measurement reports, a terminal and a network element.

### Background

To improve network-side performance and network optimization, and to ensure and improve user service quality, the 5G specification of the 3rd Generation Partnership Project (3GPP) supports User Equipment (UE) in reporting the following reports to the network side, for example, a Radio Link Failure (RLF) report, a Secondary Cell Group (SCG) failure information report, a Successful Handover Report (SHR), a Successful PSCell Change/Add Report (SPR), a Random Access Channel (RACH) report, a RAN Visible Quality of Experience (RVQoE) report, etc. After the network side receives the above reports, the receiving network node needs to forward the corresponding report to a network node where a cell related to generation of the report is located, or to a network node where configuration conditions triggered by the report are generated, or to a network node that needs the report for optimizing related processes. 3GPP defines a series of complex forwarding procedures to ensure that after the network side receives the above reports, the corresponding reports can be forwarded to corresponding appropriate target network nodes.

These forwarding procedures consume a large amount of interface resources, and may cause duplicate forwarding. If a network node supporting artificial intelligence or machine learning needs to acquire the above reports, since these reports may be scattered among different network nodes, and each network node may delete the corresponding reports within a certain period of time, the network node where the artificial intelligence or machine learning is located cannot acquire the above reports, thereby failing to effectively utilize artificial intelligence and machine learning to perform unified analysis on these reports, so as to optimize network performance.

In addition, the 5G specification of 3GPP supports UE in reporting the following reports to the server side: a Minimization of Drive Test (MDT) report, and a Quality of Experience (QoE) report. After receiving the above reports sent by the UE, the network side transparently transmits these reports to the server side without directly parsing these reports. The receiving server is usually outside the management scope of the network side. If a network node supporting artificial intelligence or machine learning needs to acquire the MDT report or the QoE report, since these reports are located on a server outside the management scope of the network side, the network node where the artificial intelligence or machine learning is located cannot acquire the above reports, thereby failing to effectively utilize artificial intelligence and machine learning to perform unified analysis on these reports, so as to optimize network performance.

In summary, there is no good solution to the above problems.

### Summary

Embodiments of the present disclosure provide a method for processing measurement reports, a terminal and a network element, so as to at least solve the problem in the related art that a network node cannot acquire a required terminal report to perform network performance optimization.

According to an embodiment of the present disclosure, a method for processing measurement reports is provided, applied to a terminal, the method including: reporting a measurement report to a target network element according to preconfigured target network element information.

According to another embodiment of the present disclosure, a method for processing measurement reports is provided, applied to a network element, the method including: acquiring a measurement report reported by at least one terminal according to preconfigured target network element information.

According to yet another embodiment of the present disclosure, a terminal is further provided, including a memory, a processor, and a computer program stored on the memory, the processor executing the computer program to implement the steps in any one of the above method embodiments.

According to yet another embodiment of the present disclosure, a network element is further provided, including a memory, a processor, and a computer program stored on the memory, the processor executing the computer program to implement the steps in any one of the above method embodiments.

According to yet another embodiment of the present disclosure, a computer-readable storage medium is further provided, the storage medium having a computer program stored therein, wherein the computer program, when being executed by a processor, executes the steps in any one of the above method embodiments.

According to yet another embodiment of the present disclosure, an electronic device is further provided, including a memory and a processor, the memory having a computer program stored therein, the processor being configured to run the computer program to execute the steps in any one of the above method embodiments.

According to yet another embodiment of the present disclosure, a computer program product is further provided, including a computer program, the computer program, when being executed by a processor, implementing the steps in any one of the above method embodiments.

### Brief Description of the Drawings

FIG. 1 is a hardware structure block diagram of a method for processing measurement reports according to an embodiment of the present disclosure;
FIG. 2 is a flowchart of a method for processing measurement reports on a terminal side according to an embodiment of the present disclosure;
FIG. 3 is a flowchart of a method for processing measurement reports on a network element side according to an embodiment of the present disclosure;
FIG. 4 is a schematic diagram of a core network configuring a target NF of a terminal through NAS signaling according to an embodiment of the present disclosure;
FIG. 5 is a schematic diagram of a core network or a network side configuring a target NF of a terminal through RRC signaling according to an embodiment of the present disclosure;
FIG. 6 is a schematic diagram of a terminal reporting a measurement report to a target NF according to an embodiment of the present disclosure;
FIG. 7 is a schematic diagram of a terminal reporting a measurement report to a target NF according to another embodiment of the present disclosure;
FIG. 8 is a schematic diagram of another network element acquiring a measurement report according to an embodiment of the present disclosure.

### Detailed Description of the Embodiments

Hereinafter, embodiments of the present disclosure will be described in detail with reference to the accompanying drawings and in conjunction with the embodiments.

It should be noted that the terms "first", "second" and the like in the specification and claims of the present disclosure and the above drawings are used to distinguish similar objects, and are not necessarily used to describe a specific order or sequence.

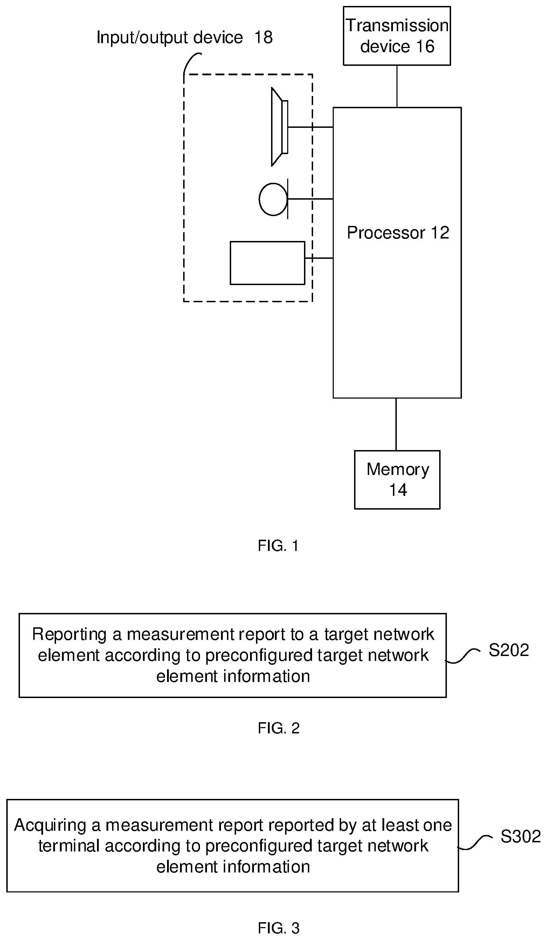

In an embodiment of the present disclosure, a method for processing measurement reports is provided, applied to a terminal, including but not limited to a computer terminal, a mobile terminal, etc. The method embodiments provided in the embodiments of the present disclosure may be executed in a mobile terminal, a computer terminal, or a similar computing device. Taking running on a computer terminal as an example, FIG. 1 is a hardware structure block diagram of a method for processing measurement reports according to an embodiment of the present disclosure. As shown in FIG. 1, a hardware board may include one or more (only one is shown in FIG. 1) processors 12 (the processor 12 may include but is not limited to a processing device such as a microprocessor MCU or a programmable logic device) and a memory 14 for storing data, wherein the above computer terminal may further include a transmission device 16 and an input/output device 18 for communication functions. A person of ordinary skill in the art may understand that the structure shown in FIG. 1 is only illustrative and does not limit the structure of the above computer terminal. For example, the computer terminal may also include more or fewer components than those shown in FIG. 1, or have a configuration different from that shown in FIG. 1.

The memory 14 may be used to store a computer program, for example, software programs and modules of application software, such as a computer program corresponding to the method for processing measurement reports in the embodiments of the present disclosure. The processor 12 executes the computer program stored in the memory 14 to execute various functional applications and the method for processing measurement reports, i.e., to implement the above methods. The memory 14 may include a high-speed random access memory, and may also include a non-volatile memory, such as one or more magnetic storage devices, a flash memory, or other non-volatile solid-state memories. In some examples, the memory 14 may further include memories remotely disposed relative to the processor 12, and these remote memories may be connected to the computer terminal via a network. Examples of the above network include, but are not limited to, the Internet, an intranet, a local area network, a mobile communication network, and combinations thereof.

The transmission device 16 is used to receive or transmit data via a network. Specific examples of the above network may include a wireless network provided by a communication provider. In one example, the transmission device 16 includes a Network Interface Controller (NIC), which may be connected to other network devices via a base station so as to communicate with the Internet. In one example, the transmission device 16 may be a Radio Frequency (RF) module, which is used to communicate with the Internet wirelessly.

FIG. 2 is a flowchart of a method for processing measurement reports on a terminal side according to an embodiment of the present disclosure. As shown in FIG. 2, the flow includes the following steps.

Step S202, reporting a measurement report to a target network element according to preconfigured target network element information.

In the present embodiment, the terminal can report measurement reports to one or more target network elements in a centralized manner, avoiding unnecessary forwarding procedures during reporting of the measurement reports. When another network element (such as a network node where artificial intelligence or machine learning is located) needs measurement reports, the other network element can acquire the required measurement reports from the one or more centralized network elements, effectively utilize artificial intelligence and machine learning to perform unified analysis on these measurement reports, so as to optimize network performance, thereby solving the problem in the related art that a network node cannot acquire a required terminal measurement report to perform network performance optimization.

In some embodiments, the target network element includes a Network Function (NF).

In the present embodiment, 3GPP defines a Service-based Architecture (SBA) for a 5G Core Network (CN). The SBA provides a cloud-native service framework in which functions of the CN (such as authentication, mobility management, etc.) are supported by Network Functions (NFs). The NFs of 3GPP provide services accessible to any other authorized NF through Application Programming Interfaces (APIs) called Service-based Interfaces (SBIs). Services exposed by one NF (service provider) to another NF (service consumer) are described using API specifications, which define corresponding SBI messages, indicate a set of service data accessible in the messages, and indicate authorized operations on these service data.

In the present embodiment, SBI messaging between various NF network elements may be performed through HyperText Transfer Protocol (HTTP) such as HTTP2. Any NF network element can use services provided by another NF based on HTTP SBI messages without introducing a specific new protocol or interface.

Further, through HTTP-based SBI messages, the target network element (NF) provides the measurement report to any other authorized NF for access in the form of providing service data.

In some embodiments, the target network element information in step S202 includes at least one of: an NF instance identifier, or an endpoint address. The NF instance identifier (NF Instance ID) is used to identify the NF instance receiving the report, and the endpoint address is used to indicate a network address at which the NF instance receives the report.

Further, the network address may be an Internet Protocol (IP) address and an IP port, or a Fully Qualified Domain Name (FQDN).

In the present embodiment, the target network element information is used to indicate a network element for centrally collecting measurement reports, which may specifically be an NF instance. Each NF instance is allocated an NF instance identifier and an endpoint address during a registration phase. The target network element information only needs to carry either piece of information, and the terminal or the base station can match the corresponding other piece of information according to registration information of the NF instance.

In some embodiments, the measurement report in step S202 includes at least one of: a Radio Link Failure (RLF) report, a Secondary Cell Group (SCG) failure information report, a Successful Handover Report (SHR) report, a Successful Primary Secondary Cell Addition or Change Report (SPR) report, a Random Access Channel (RACH) report, a User History Information (UHI) report, a Minimization of Drive Test (MDT) report, a Quality of Experience (QoE) report, or a RAN Visible Quality of Experience (RVQoE) report.

Further, in the 3GPP 5G specification, the measurement reports supported by the terminal include the reports defined as follows:
Radio Link Failure (RLF) report: when a physical layer or layer 2 of the UE detects certain problems in a radio link, which may cause communication to be unable to continue and trigger Radio Resource Control (RRC) connection re-establishment, the UE records an RLF report. Usually during a handover process, too early, too late, or handover to a wrong cell may cause a radio link failure of a source cell or a target cell. The UE needs to report the RLF report to the network side, and the network side needs to forward the RLF report to the source cell or the target cell corresponding to the handover, so that the cells related to the handover can check and optimize related handover parameters based on the RLF report.

Secondary Cell Group (SCG) failure information report: for analysis of a Primary Secondary Cell (PSCell) change failure, the UE provides SCG failure information to a Master node (MN). If the MN can perform preliminary analysis, it transfers the SCG failure information together with an analysis result to a relevant Secondary node (SN) responsible for the PSCell change failure. Otherwise, the MN transfers the SCG failure information to a last serving SN, or a source serving SN. The MN or the SN uses the SCG failure information report to check and optimize related PSCell change parameters.

Successful Handover Report (SHR): the network side can configure the UE to generate an SHR report and send it to the network side after a successful handover but due to timeout of certain timers. The network side needs to forward the corresponding SHR report to a corresponding source cell or target cell according to whether the timeout of certain timers is configured by the source cell or by the target cell during the handover process, so that the network node where the corresponding cell is located can optimize related handover parameters and corresponding timer settings.

Successful PSCell Change/Add Report (SPR): the UE supports the SPR report according to configuration of the network. The UE stores the SPR until the network acquires the SPR. The network needs to forward the SPR to the MN or the SN that served the UE when the SPR was generated.

Random Access Channel (RACH) report: when the UE initiates a RACH access procedure to a new target cell, if the RACH access fails, the UE needs to generate a RACH report and report it to the network side. The network needs to forward the RACH report to a corresponding cell where the RACH access failed.

User History Information (UHI) report: when the UE can report its historical information to the network side, the relevant historical information includes cells to which the UE was connected within a period of time, connection time, etc.

Minimization of Drive Test (MDT) report: the UE supports measuring and recording, in a connected state, an idle state, or an inactive state, Reference Signal Receiving Power (RSRP), Reference Signal Receiving Quality (RSRQ), a Power Headroom Report (PHR), typical event measurements, location information measurements, and other related measurements of a connected cell or neighboring cells. The UE reports the MDT report to the network side, and the network side needs to forward the MDT report to an MDT report receiving server.

Quality of Experience (QoE) report: the report is used to record the overall acceptability of an application or service perceived subjectively by a user, such as start-up time, re-buffering, visual quality, and whether there is stuttering for a video service. The UE reports the QoE to the network side, and the network side needs to forward the QoE report to a QoE server.

RAN Visible Quality of Experience (RVQoE) report: the QoE report is directly reported to the QoE report receiving server, and the network side only transparently transmits the QoE report to the QoE report receiving server, and the network cannot directly parse the QoE report and use it for network optimization. Therefore, in 3GPP Rel-17, it is supported that the network side configures the UE to report the RVQoE report. A network node to which the UE is connected can, based on user service optimization requirements, configure the UE to report the RVQoE report of a service. The RVQoE report is a QoE report that can be parsed by the network side, and is directly sent by the UE to a network side node, while the receiving network side node may need to forward the received RVQoE report to a required network node.

The present disclosure is not limited to the above terminal reports. If the terminal has other information or reports that need to be provided to other network elements, they can all be reported in a centralized manner through the method in the embodiments of the present disclosure.

In the embodiments of the present disclosure, through the above step S202, the terminal can report the above measurement report to a specified target network element, thereby avoiding unnecessary forwarding procedures during reporting of the measurement report. For example, for an RLF report, the UE needs to report the RLF report to the network side, and the network side then forwards the RLF report to a source cell or a target cell corresponding to the handover. Not only is the forwarding procedure complex, but when another network element needs this RLF report, it can only acquire it from the source cell or the target cell, and may fail to acquire it. Through the embodiments of the present disclosure, the UE can directly report measurement reports to a specified target network element in a centralized manner, avoiding intermediate forwarding procedures, and other network elements can also acquire required measurement reports through this centralized network element.

In some embodiments, before the terminal starts reporting the measurement report in step S202, the terminal needs to have the following conditions: the terminal has received configured target network element information; the terminal has generated at least one measurement report according to different report generation conditions; the terminal has entered a Radio Resource Control (RRC) connected state; and the terminal satisfies a measurement report reporting condition, or the terminal has received a terminal report request message from the network side.

In some embodiments, step S202 of reporting a measurement report to a target network element according to preconfigured target network element information may include the following steps:
step S2022, configuring a Hypertext Transfer Protocol (HTTP) message carrying the measurement report according to the target network element information;
step S2024, encapsulating the HTTP message into user data, and transparently transmitting, via a base station, the user data containing the HTTP message to the target network element.

In the present embodiment, the HTTP message contains at least one measurement report and an NF instance identifier of a target network element corresponding to the measurement report, and a target address in an HTTP header of the HTTP message is an endpoint address of the target network element.

Further, the target network element information may include only the NF instance identifier or the endpoint address, and the terminal may acquire the corresponding endpoint address according to the NF instance identifier of the target network element, or the terminal may acquire the corresponding NF instance identifier according to the endpoint address of the target network element.

In other embodiments, step S202 of reporting a measurement report to a target network element according to preconfigured target network element information may include the following steps:
step S2026, configuring a Radio Resource Control (RRC) message according to the target network element information, wherein the RRC message carries at least one measurement report and the target network element information;
step S2028, sending the RRC message to a base station, wherein the base station is configured to configure an HTTP message carrying the measurement report according to the measurement report and the target network element information, and to send the HTTP message to the target network element.

In the present embodiment, the HTTP message contains at least one measurement report and an NF instance identifier of a target network element corresponding to the measurement report, and a target address in an HTTP header of the HTTP message is an endpoint address of the target network element.

Further, the target network element information may include only the NF instance identifier or the endpoint address, and the base station may acquire the corresponding endpoint address according to the NF instance identifier of the target network element, or the base station may acquire the corresponding NF instance identifier according to the endpoint address of the target network element.

In some embodiments, before reporting a measurement report to a target network element according to preconfigured target network element information in step S202, the method further includes the following step:
step S201, acquiring at least one piece of the target network element information delivered by a core network or a base station, wherein the target network element information is used to indicate the target network element to which at least one type of the measurement report is to be reported.

In the present embodiment, the terminal may be configured with one or more pieces of target network element information, thereby enabling reporting of the same type or different types of measurement reports to one or more specified target network elements.

In some embodiments, step S201 of acquiring at least one piece of the target network element information delivered by a core network or a base station may include any one of the following steps:
step S2012, receiving Non-Access Stratum (NAS) signaling delivered by the core network and carrying at least one piece of the target network element information;
step S2014, receiving Radio Resource Control (RRC) signaling delivered by the base station and carrying at least one piece of the target network element information.

In the present embodiment, the core network may directly configure the target network element to which the terminal is to report the measurement report through higher-layer signaling (NAS signaling), or the core network may indirectly configure the target network element of the terminal through the base station.

In some embodiments, the RRC signaling in step S2014 is configured by the base station after receiving a Next Generation Application Protocol (NGAP) message sent by the core network and related to a current terminal, wherein the NGAP message carries at least one piece of the target network element information; or, the RRC signaling is configured by the base station after receiving a preset message or a preset command sent by a network side and related to a current terminal, wherein the preset message or the preset command carries at least one piece of the target network element information.

Further, the preset message or preset command related to the current terminal may come from any network node or NF network element on the network side, such as an Operation Administration and Maintenance (OAM) network element. The target network element information may be carried in any preset message or preset command related to the current terminal, and the present disclosure does not limit the type of the preset message or preset command.

Through the method for processing measurement reports in the embodiments of the present disclosure, the terminal can report the measurement report to the target network element according to preconfigured target network element information. In a case where multiple terminals in a certain area are all configured with target network elements to which measurement reports are to be reported, centralized collection of measurement reports of the terminals within the area can be achieved, avoiding unnecessary forwarding procedures during reporting of the measurement reports. Other network elements can acquire the measurement reports from the target network element, thereby solving the problem in the related art that a network node cannot acquire a required terminal measurement report to perform network performance optimization.

In an embodiment of the present disclosure, a method for processing measurement reports is provided, applied to a network element. FIG. 3 is a flowchart of a method for processing measurement reports on a network element side according to an embodiment of the present disclosure. As shown in FIG. 3, the flow includes the following step:
step S302, acquiring a measurement report reported by at least one terminal according to preconfigured target network element information.

In the embodiments of the present disclosure, the network element can centrally collect measurement reports reported by one or more terminals, avoiding unnecessary forwarding procedures during reporting of the measurement reports. When another network element (such as a network node where artificial intelligence or machine learning is located) needs measurement reports, the other network element can acquire the required measurement reports from the centralized network element, effectively utilize artificial intelligence and machine learning to perform unified analysis on these measurement reports, so as to optimize network performance, thereby solving the problem in the related art that a network node cannot acquire a required terminal measurement report to perform network performance optimization.

In some embodiments, the network element includes a Network Function (NF).

In some embodiments, the target network element information in step S302 includes at least one of: an NF instance identifier, or an endpoint address. The NF instance identifier (NF Instance ID) is used to identify the NF instance receiving the report, and the endpoint address is used to indicate a network address at which the NF instance receives the report.

Further, the network address may be an Internet Protocol (IP) address and an IP port, or a Fully Qualified Domain Name (FQDN).

In the present embodiment, each terminal reports the measurement report to a specified target network element according to the target network element information. Only in a case where the target network element information includes the NF instance identifier or the endpoint address of the current network element can the current network element receive the measurement report of the corresponding terminal.

In some embodiments, the measurement report in step S302 includes at least one of: a Radio Link Failure (RLF) report, a Secondary Cell Group (SCG) failure information report, a Successful Handover Report (SHR) report, a Successful Primary Secondary Cell Addition or Change Report (SPR) report, a Random Access Channel (RACH) report, a User History Information (UHI) report, a Minimization of Drive Test (MDT) report, a Quality of Experience (QoE) report, or a RAN Visible Quality of Experience (RVQoE) report.

In the embodiments of the present disclosure, through the above step S302, the network element can directly acquire the measurement report of the terminal, thereby avoiding unnecessary forwarding procedures during reporting of the measurement report. For example, for an RLF report, the UE needs to report the RLF report to the network side, and the network side then forwards the RLF report to a source cell or a target cell corresponding to the handover. Not only is the forwarding procedure complex, but when another network element needs this RLF report, it can only acquire it from the source cell or the target cell, and may fail to acquire it. Through the embodiments of the present disclosure, the current network element can centrally collect measurement reports reported by one or more UEs, avoiding intermediate forwarding procedures. According to the needs of other network elements, the current network element can also provide the collected measurement reports to other network elements in the form of service data.

In some embodiments, step S302 of acquiring a measurement report reported by at least one terminal according to preconfigured target network element information may include: acquiring, from a base station, a Hypertext Transfer Protocol (HTTP) message carrying the measurement report reported by the terminal, wherein the HTTP message is configured by the terminal or the base station according to the target network element information.

In the present embodiment, the HTTP message contains at least one measurement report and an NF instance identifier of a target network element corresponding to the measurement report, and a target address in an HTTP header of the HTTP message is an endpoint address of the target network element.

In an exemplary embodiment, in a case where the HTTP message is configured by the terminal according to the target network element information, acquiring, from a base station, the HTTP message carrying the measurement report reported by the terminal includes: receiving user data transparently transmitted by the base station and containing the HTTP message, wherein the user data is sent to the base station after being encapsulated by the terminal for the HTTP message.

Further, the target network element information may include only the NF instance identifier or the endpoint address, and the terminal may acquire the corresponding endpoint address according to the NF instance identifier of the target network element, or the terminal may acquire the corresponding NF instance identifier according to the endpoint address of the target network element.

In an exemplary embodiment, in a case where the HTTP message is configured by the base station according to the target network element information, the target network element information and the measurement report are acquired by the base station from a Radio Resource Control (RRC) message sent by the terminal, wherein the RRC message is configured by the terminal according to the target network element information, and the RRC message carries at least one measurement report and the target network element information.

Further, the target network element information may include only the NF instance identifier or the endpoint address, and the base station may acquire the corresponding endpoint address according to the NF instance identifier of the target network element, or the base station may acquire the corresponding NF instance identifier according to the endpoint address of the target network element.

In the present embodiment, 3GPP defines a Service-based Architecture (SBA) for a 5G Core Network. The SBA provides a cloud-native service framework in which functions of the CN (such as authentication, mobility management, etc.) are supported by Network Functions (NFs). The NFs of 3GPP provide services accessible to any other authorized NF through Service-based Interfaces (SBIs). SBI messaging between various NF network elements may be performed through HTTP (such as HTTP2). Any NF network element can use services provided by another NF based on HTTP SBI messages without introducing a specific new protocol or interface.

In the present embodiment, the measurement report may serve as a service type in NF services, and is exposed by one NF (NF service provider) to other NFs (NF service consumers) through a Service-based Interface. The current network element is the NF service provider, configured to centrally collect measurement reports of terminals, and the other network elements are NF service consumers, which acquire the measurement reports of the terminals through the current network element.

Further, in NF services, end-to-end interactions between two network functions (consumer and producer) follow the following two mechanisms:
"Request-Response": NF_B (NF service provider) is requested by another NF_A (NF service consumer) to provide a certain NF service, and NF_B provides the NF service according to the request of NF_A. A one-time response from the producer to the consumer's request is expected within a certain period of time.

"Subscribe-Notify": NF_A (NF service consumer) subscribes to an NF service provided by another NF_B (NF service provider). NF_B may periodically notify an updated result of this NF service, or, if certain events occur, NF_B triggers a notification.

Based on the above mechanisms, the current network element in the embodiments of the present disclosure can also serve as an NF service provider to provide other network elements with required NF services (measurement reports).

In some embodiments, after step S302, the method further includes: step S304, providing required measurement reports to other network elements other than the current network element. The other network elements here may be network nodes or network functions.

In some embodiments, step S304 may include the following steps:
step S3042, receiving an HTTP request or an HTTP subscription message sent by another network element other than the current network element, wherein the HTTP request or the HTTP subscription message carries auxiliary information of a target measurement report;
step S3044, filtering the measurement report according to the auxiliary information to obtain the target measurement report;
step S3046, sending an HTTP response message carrying the target measurement report to a sending network element corresponding to the HTTP request or the HTTP subscription message.

Further, the HTTP response message in step S3046 may be an HTTP response message corresponding to the HTTP request, or an HTTP notify message corresponding to the HTTP subscription message. The difference is that each HTTP request can only obtain a one-time HTTP response message, while the HTTP subscription message only needs to be sent once to trigger periodic HTTP notify messages, or, after the subscription is completed, each update of the measurement report can trigger an HTTP notify message.

In the present embodiment, the auxiliary information in step S3042 is used to indicate how to filter the measurement reports of the terminal to screen out the measurement report required by the NF service consumer.

In an exemplary embodiment, the auxiliary information in step S3042 includes at least one of:
at least one terminal identifier, used to indicate filtering out reports related to a specified UE;
at least one network (RAN) node identifier, used to indicate filtering out reports related to a specified RAN node;
at least one cell identifier, used to indicate filtering out reports related to a specified cell;
at least one report type, used to indicate filtering out reports related to a specified type, wherein the report type includes one of: a Radio Link Failure (RLF) report, a Secondary Cell Group (SCG) failure information report, a Successful Handover Report (SHR) report, a Successful Primary Secondary Cell Addition or Change Report (SPR) report, a Random Access Channel (RACH) report, a User History Information (UHI) report, a Minimization of Drive Test (MDT) report, a Quality of Experience (QoE) report, or a RAN Visible Quality of Experience (RVQoE) report;
at least one time period, used to indicate filtering out reports related to the time period;
at least one trigger cause, used to indicate filtering out reports triggered by the cause;
at least one threshold value, used to indicate filtering out reports that contain the measurement data and satisfy the threshold value requirement (greater than, or less than, or equal to);
at least one slice identifier, used to indicate filtering out reports related to a specified slice;
at least one Public Land Mobile Network (PLMN) identifier, used to indicate filtering out reports related to a specified PLMN;
at least one Stand-alone Non-Public Network (SNPN) identifier, used to indicate filtering out reports related to a specified SNPN;
at least one Public Network Integrated Non-Public Network Closed Access Group (PNI-NPN CAG) identifier, used to indicate filtering out reports related to a specified CAG;
at least one area range, used to indicate filtering out reports related to a specified area.

In the present embodiment, if there are multiple pieces of auxiliary information, then in step S3044, a measurement report that simultaneously satisfies the multiple pieces of auxiliary information is used as the target measurement report.

Through the embodiments of the present disclosure, one or more network elements can be configured to centrally collect measurement reports of terminals, avoiding unnecessary forwarding procedures during reporting of the measurement reports. When another network element (such as a network node where artificial intelligence or machine learning is located) needs measurement reports, the other network element can, as a service consumer, request or subscribe to required measurement reports from the centralized network element (service provider), effectively utilize artificial intelligence and machine learning to perform unified analysis on these measurement reports, so as to optimize network performance, thereby solving the problem in the related art that a network node cannot acquire a required terminal measurement report to perform network performance optimization.

In an exemplary embodiment, the target network element includes a Network Function (NF), and correspondingly, the target network element information is target NF information. The following will take this as an example to describe in detail the above method embodiments based on interactions between various network elements in a 5G communication network.

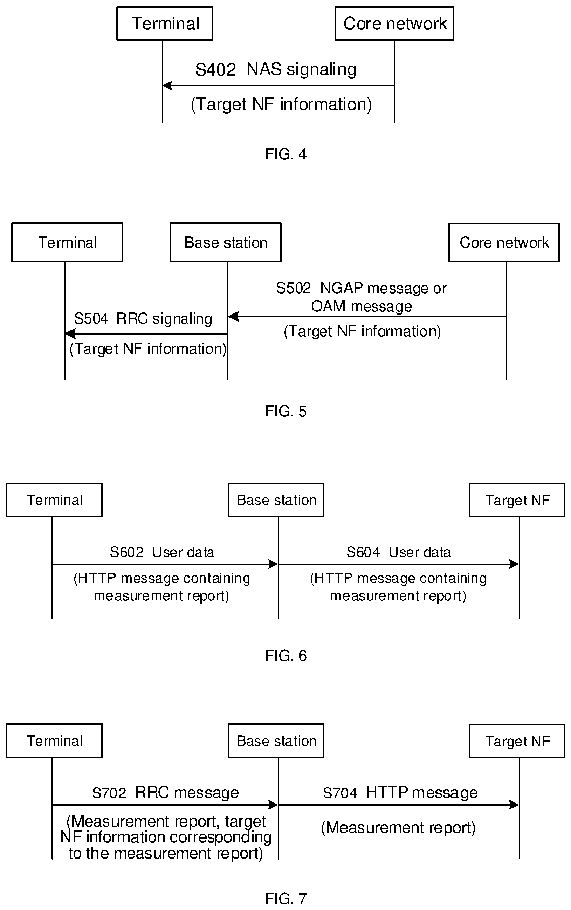

FIG. 4 is a schematic diagram of a core network configuring a target NF of a terminal through NAS signaling according to an embodiment of the present disclosure. As shown in FIG. 4, the flow includes the following steps:
step S400, a preparation stage, in which the terminal is in a network registration stage, or the terminal has already connected to the network;
step S402, the core network sends NAS signaling to the terminal, where the NAS signaling contains at least one piece of target NF information.

In the present embodiment, the target NF information is used to indicate a receiving target NF for at least one of the following types of measurement reports of the terminal: an RLF report, an SCG failure information report, an SHR report, an SPR report, an RACH report, a UHI report, an MDT report, a QoE report, an RVQoE report, etc.

In the present embodiment, the target NF information includes at least one of:
an NF instance identifier (NF Instance ID), used to identify the NF instance receiving the report;
endpoint address information, used to indicate a network address at which the NF instance receives the report, such as an IP address and a port, or a fully qualified domain name (FQDN).

In the embodiments of the present disclosure, through the above steps, the core network can directly configure, through higher-layer signaling, the target NF to which the terminal is to report the measurement report, avoiding unnecessary forwarding procedures during reporting of the measurement report, and enabling centralized reporting of the measurement report of the terminal.

FIG. 5 is a schematic diagram of a core network or a network side configuring a target NF of a terminal through RRC signaling according to an embodiment of the present disclosure. As shown in FIG. 5, the flow includes the following steps:
step S500, a preparation stage, in which the terminal has already connected to the network.
step S502, the base station receives, through an NG interface, an NGAP message sent by the core network and related to a certain UE, wherein the message contains at least one piece of target NF information; or, the base station receives a message/command (such as an OAM message) sent by a network side (such as OAM) and related to a certain UE, wherein the message/command contains at least one piece of target NF information.
step S504, the base station receives at least one piece of target NF information related to the UE for reporting by the UE, configures an RRC message, and sends the RRC message to the UE, wherein the RRC message contains the above target NF information.

In the present embodiment, the target NF information is used to indicate a receiving target NF for at least one of the following types of measurement reports of the terminal: an RLF report, an SCG failure information report, an SHR report, an SPR report, an RACH report, a UHI report, an MDT report, a QoE report, an RVQoE report, etc.

In the present embodiment, the target NF information includes at least one of:
an NF instance identifier (NF Instance ID), used to identify the NF instance receiving the report;
endpoint address information, used to indicate a network address at which the NF instance receives the report, such as an IP address and a port, or a fully qualified domain name (FQDN).

In the embodiments of the present disclosure, through the above steps, the core network or the network side can indirectly configure, through the base station, the target NF to which the terminal is to report the measurement report, avoiding unnecessary forwarding procedures during reporting of the measurement report, and enabling centralized reporting of the measurement report of the terminal.

FIG. 6 is a schematic diagram of a terminal reporting a measurement report to a target NF according to an embodiment of the present disclosure. As shown in FIG. 6, the flow includes the following steps:
step S600, a preparation stage, in which the UE has received at least one piece of target NF information, and the UE has generated at least one measurement report according to different report generation conditions, where the measurement report may be one of the following types: an RLF report, an SCG failure information report, an SHR report, an SPR report, an RACH report, a UHI report, an MDT report, a QoE report, an RVQoE report, etc;
step S602, the UE enters an RRC connected state, and if a measurement report reporting condition is satisfied, or a UE report request message from the network side is received, the UE configures an HTTP (SBI) message according to the received target NF information, encapsulates the HTTP message into user data, and sends the user data to a base station to which the terminal is connected, wherein the HTTP message contains at least one measurement report;
step S604, the base station transparently transmits the user data (carrying the HTTP message containing the measurement report) to the target NF.

In the present embodiment, the HTTP message further contains an NF instance identifier (NF Instance ID) of the target NF, and a target address in an HTTP header is an endpoint address of the target NF.

In the embodiments of the present disclosure, through the above steps, the terminal can report the measurement report to the target NF through user data transparently transmitted via the base station, avoiding unnecessary forwarding procedures during reporting of the measurement report, and enabling centralized reporting of the measurement report of the terminal.

FIG. 7 is a schematic diagram of a terminal reporting a measurement report to a target NF according to another embodiment of the present disclosure. As shown in FIG. 7, the flow includes the following steps:
step S700, a preparation stage, in which the UE has received at least one piece of target NF information, and the UE has generated at least one measurement report according to different report generation conditions, where the measurement report may be one of the following types: an RLF report, an SCG failure information report, an SHR report, an SPR report, an RACH report, a UHI report, an MDT report, a QoE report, an RVQoE report, etc;
step S702, the UE enters an RRC connected state, and if a UE report reporting condition is satisfied, or a UE report request message from the network side is received, the UE configures an RRC message according to the received target NF information, and sends the RRC message to the connected base station, wherein the RRC message contains at least one measurement report and target NF information corresponding to the report;
step S704, the base station configures an HTTP message (SBI message) according to the received measurement report and the target NF information, and the base station sends the HTTP message to the target NF.

In the present embodiment, the HTTP message contains the following information: at least one measurement report, and an NF instance identifier (NF Instance ID) of the target NF corresponding to the measurement report. A target address in an HTTP header of the HTTP message is an endpoint address of the target NF.

In the embodiments of the present disclosure, through the above steps, the terminal can send the measurement report and information of the corresponding target NF to be reported to the base station through the RRC message, and the base station then reports the measurement report to the specified target NF through the HTTP message, avoiding unnecessary forwarding procedures during reporting of the measurement report, and enabling centralized reporting of the measurement report of the terminal.

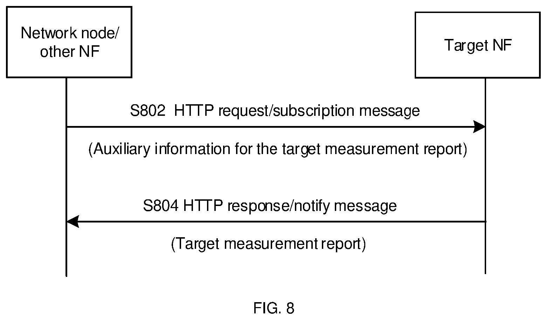

FIG. 8 is a schematic diagram of another network element acquiring a measurement report according to an embodiment of the present disclosure. As shown in FIG. 8, the flow includes the following steps:
step S800, a preparation stage, in which the target NF has received the measurement report. The target NF is a centralized NF that can be configured to receive and save measurement reports of a specific network range. Another network element needs to acquire a specific UE report for network optimization or machine learning model training and inference. Exemplarily, the other network element may include: a network node (RAN node) or another NF other than the target NF;
step S802, the network node or the other NF sends an HTTP request message or an HTTP subscription message to the target NF. The HTTP request/subscription message contains at least one piece of auxiliary information of the target measurement report, used to indicate how to filter the measurement reports to screen out the required target measurement report;
step S804, the target NF receives the HTTP request/subscription message, and filters the measurement reports according to the options contained in the "auxiliary information of the target measurement report" in the message, wherein the filtered target measurement report should simultaneously conform to the setting options of the "auxiliary information of the target measurement report". The target NF sends an HTTP response message to the sender, wherein the response message contains at least one target measurement report that satisfies the filtering conditions.

In the present embodiment, the HTTP response message may include: an HTTP response message corresponding to the HTTP request message, or an HTTP notify message corresponding to the HTTP subscription message. The difference is that each HTTP request can only obtain a one-time HTTP response message; while the HTTP subscription message only needs to be sent once to trigger periodic HTTP notify messages, or, after the subscription is completed, each update of the measurement report can trigger an HTTP notify message.

In an exemplary embodiment, the auxiliary information of the target measurement report includes at least one of:
at least one UE identifier, used to indicate filtering out reports related to a specified UE;
at least one RAN node identifier, used to indicate filtering out reports related to a specified RAN node;
at least one cell identifier, used to indicate filtering out reports related to a specified cell;
at least one report type, used to indicate filtering out reports related to a specified type, wherein the report type includes one of: an RLF report, an SCG failure information report, an SHR report, an SPR report, an RACH report, a UHI report, an MDT report, a QoE report, or an RVQoE report;
at least one time period, used to indicate filtering out reports related to the time period;
at least one trigger cause, used to indicate filtering out reports triggered by the cause;
at least one threshold value, used to indicate filtering out reports that contain the measurement data and satisfy the threshold value requirement (greater than, or less than, or equal to);
at least one slice identifier, used to indicate filtering out reports related to a specified slice;
at least one PLMN identifier, used to indicate filtering out reports related to a specified PLMN;
at least one SNPN identifier, used to indicate filtering out reports related to a specified SNPN;
at least one PNI-NPN CAG identifier, used to indicate filtering out reports related to a specified CAG;
at least one area range, used to indicate filtering out reports related to a specified area.

In the embodiments of the present disclosure, through the above steps, other network elements can acquire required measurement reports from the target NF, ensuring the acquisition of measurement reports by other network elements. Further, the other network elements here may be network nodes or NFs supporting artificial intelligence or machine learning, and can effectively utilize artificial intelligence and machine learning to perform unified analysis on measurement reports, thereby optimizing network performance.

Embodiments of the present disclosure further provide a terminal, including a memory, a processor, and a computer program stored on the memory, the processor executing the computer program to implement the steps in any one of the above method embodiments.

Embodiments of the present disclosure further provide a network element, including a memory, a processor, and a computer program stored on the memory, the processor executing the computer program to implement the steps in any one of the above method embodiments.

In some embodiments, the network element includes a Network Function (NF) network element.

Embodiments of the present disclosure further provide a computer-readable storage medium, having a computer program stored therein, wherein the computer program, when being executed by a processor, executes the steps in any one of the above method embodiments.

In an exemplary embodiment, the above computer-readable storage medium may include but is not limited to: a USB flash drive, a Read-Only Memory (ROM), a Random Access Memory (RAM), a removable hard disk, a magnetic disk, or an optical disk, and other various media that can store computer programs.

Embodiments of the present disclosure further provide an electronic device, including a memory and a processor, the memory having a computer program stored therein, the processor being configured to run the computer program to execute the steps in any one of the above method embodiments.

In an exemplary embodiment, the above electronic device may further include a transmission device and an input/output device, wherein the transmission device is connected to the above processor, and the input/output device is connected to the above processor.

Embodiments of the present disclosure further provide a computer program product, including a computer program, the computer program, when being executed by a processor, implementing the steps in any one of the above method embodiments.

For specific examples in the present embodiment, reference may be made to the examples described in the above embodiments and exemplary implementations, and the present embodiment will not be described herein again.

Obviously, those skilled in the art should understand that the above modules or steps of the present disclosure can be implemented by a general-purpose computing device, and they can be centralized on a single computing device or distributed on a network composed of multiple computing devices. They can be implemented by program codes executable by the computing device, so that they can be stored in a storage device and executed by the computing device, and in some cases, the steps shown or described can be performed in an order different from that here, or they can be separately fabricated into individual integrated circuit modules, or multiple modules or steps among them can be fabricated into a single integrated circuit module for implementation. In this way, the present disclosure is not limited to any specific combination of hardware and software.

The above descriptions are only exemplary embodiments of the present disclosure and are not intended to limit the present disclosure. For those skilled in the art, the present disclosure may have various modifications and changes. Any modifications, equivalent substitutions, improvements, etc. made within the principle of the present disclosure should be included within the protection scope of the present disclosure.

## Claims

1. A method for processing measurement reports, applied to a terminal, the method comprising:
reporting a measurement report to a target network element according to preconfigured target network element information.

2. The method according to claim 1, wherein the target network element comprises a Network Function (NF).

3. The method according to claim 1, wherein the target network element information comprises at least one of: an NF instance identifier, or an endpoint address.

4. The method according to claim 1, wherein the measurement report comprises at least one of:
a Radio Link Failure (RLF) report, a Secondary Cell Group (SCG) failure information report, a Successful Handover Report (SHR) report, a Successful Primary Secondary Cell Addition or Change Report (SPR) report, a Random Access Channel (RACH) report, a User History Information (UHI) report, a Minimization of Drive Test (MDT) report, a Quality of Experience (QoE) report, or a RAN Visible Quality of Experience (RVQoE) report.

5. The method according to claim 1, wherein reporting a measurement report to a target network element according to preconfigured target network element information comprises:
configuring a Hypertext Transfer Protocol (HTTP) message carrying the measurement report according to the target network element information;
encapsulating the HTTP message into user data, and transparently transmitting, via a base station, the user data containing the HTTP message to the target network element.

6. The method according to claim 1, wherein reporting a measurement report to a target network element according to preconfigured target network element information comprises:
configuring a Radio Resource Control (RRC) message according to the target network element information, wherein the RRC message carries at least one measurement report and the target network element information; and
sending the RRC message to a base station, wherein the base station is configured to configure an HTTP message carrying the measurement report according to the measurement report and the target network element information, and to send the HTTP message to the target network element.

7. The method according to any one of claims 5 or 6, wherein the HTTP message contains at least one measurement report and an NF instance identifier of a target network element corresponding to the measurement report, and a target address in an HTTP header of the HTTP message is an endpoint address of the target network element.

8. The method according to claim 1, wherein before reporting a measurement report to a target network element according to preconfigured target network element information, the method further comprises:
acquiring at least one piece of the target network element information delivered by a core network or a base station, wherein the target network element information is used to indicate the target network element to which at least one type of the measurement report is to be reported.

9. The method according to claim 8, wherein acquiring at least one piece of the target network element information delivered by a core network or a base station comprises:
receiving a Non-Access Stratum (NAS) signaling delivered by the core network and carrying at least one piece of the target network element information; or,
receiving an RRC signaling delivered by the base station and carrying at least one piece of the target network element information.

10. The method according to claim 9, wherein:
the RRC signaling is configured by the base station after receiving a Next Generation Application Protocol (NGAP) message sent by the core network and related to a current terminal, wherein the NGAP message carries at least one piece of the target network element information; or,
the RRC signaling is configured by the base station after receiving a preset message or a preset command sent by a network side and related to a current terminal, wherein the preset message or the preset command carries at least one piece of the target network element information.

11. A method for processing measurement reports, applied to a network element, the method comprising:
acquiring a measurement report reported by at least one terminal according to preconfigured target network element information.

12. The method according to claim 11, wherein the network element comprises a Network Function (NF).

13. The method according to claim 11, wherein the target network element information comprises at least one of: an NF instance identifier, or an endpoint address.

14. The method according to claim 11, wherein the measurement report comprises at least one of:
a Radio Link Failure (RLF) report, a Secondary Cell Group (SCG) failure information report, a Successful Handover Report (SHR) report, a Successful Primary Secondary Cell Addition or Change Report (SPR) report, a Random Access Channel (RACH) report, a User History Information (UHI) report, a Minimization of Drive Test (MDT) report, a Quality of Experience (QoE) report, or a RAN Visible Quality of Experience (RVQoE) report.

15. The method according to claim 11, wherein acquiring a measurement report reported by at least one terminal according to preconfigured target network element information comprises:
acquiring, from a base station, a Hypertext Transfer Protocol (HTTP) message carrying the measurement report reported by the terminal, wherein the HTTP message is configured by the terminal or the base station according to the target network element information.

16. The method according to claim 15, wherein:
in response to the HTTP message being configured by the terminal according to the target network element information, acquiring, from the base station, the HTTP message carrying the measurement report reported by the terminal comprises: receiving user data transparently transmitted by the base station and containing the HTTP message, wherein the user data is sent to the base station after being encapsulated by the terminal for the HTTP message.

17. The method according to claim 15, wherein:
in response to the HTTP message being configured by the base station according to the target network element information, the target network element information and the measurement report are acquired by the base station from a Radio Resource Control (RRC) message sent by the terminal, wherein the RRC message is configured by the terminal according to the target network element information, and the RRC message carries at least one measurement report and the target network element information.

18. The method according to any one of claims 15 to 17, wherein the HTTP message contains at least one measurement report and an NF instance identifier of a target network element corresponding to the measurement report, and a target address in an HTTP header of the HTTP message is an endpoint address of the target network element.

19. The method according to claim 11, wherein the method further comprises:
receiving an HTTP request or an HTTP subscription message sent by another network element other than a current network element, wherein the HTTP request or the HTTP subscription message carries auxiliary information of a target measurement report;
filtering the measurement report according to the auxiliary information to obtain the target measurement report; and
sending an HTTP response message carrying the target measurement report to a sending network element corresponding to the HTTP request or the HTTP subscription message.

20. The method according to claim 19, wherein the auxiliary information comprises at least one of:
at least one terminal identifier;
at least one network node identifier;
at least one cell identifier;
at least one report type, wherein the report type comprises one of: a Radio Link Failure (RLF) report, a Secondary Cell Group (SCG) failure information report, a Successful Handover Report (SHR) report, a Successful Primary Secondary Cell Addition or Change Report (SPR) report, a Random Access Channel (RACH) report, a User History Information (UHI) report, a Minimization of Drive Test (MDT) report, a Quality of Experience (QoE) report, or a RAN Visible Quality of Experience (RVQoE) report;
at least one time period;
at least one trigger cause;
at least one threshold value;
at least one slice identifier;
at least one Public Land Mobile Network (PLMN) identifier;
at least one Stand-alone Non-Public Network (SNPN) identifier;
at least one Public Network Integrated Non-Public Network Closed Access Group (PNI-NPN CAG) identifier; or
at least one area range.

21. A terminal, comprising a memory, a processor, and a computer program stored in the memory, wherein the processor is configured to execute the computer program to implement steps of the method according to any one of claims 1 to 10.

22. A network element, comprising a memory, a processor, and a computer program stored on the memory, wherein the processor is configured to execute the computer program to implement steps of the method according to any one of claims 11 to 20.

23. A computer-readable storage medium, having a computer program stored therein, wherein the computer program, when being executed by a processor, is configured to execute the method according to any one of claims 1 to 20.

24. An electronic device, comprising a memory and a processor, wherein the memory stores a computer program, and the processor is configured to run the computer program to execute the method according to any one of claims 1 to 20.

25. A computer program product, comprising a computer program, wherein the computer program, when being executed by a processor, is configured to implement steps of the method according to any one of claims 1 to 20.
